# EUROPÄISCHE PATENTSCHRIFT

(11) **EP 0 758 039 B1**
(45) Veröffentlichungstag und Bekanntmachung des Hinweises auf die Patenterteilung: **28.02.2001**
(21) Anmeldenummer: 95111753.0
(22) Anmeldetag: 26.07.1995
(51) Int. Cl.: E04B 1/41, F16B 17/00, B21K 25/00, B23P 11/00

(54) **Ankerschiene für die Bautechnik**
Anchorage rail for use in construction work
Rail d'ancrage pour la technique du bâtiment

(43) Veröffentlichungstag der Anmeldung: 12.02.1997
(73) Patentinhaber: HALFEN GmbH & CO. Kommanditgesellschaft, 40764 Langenfeld-Richrath (DE)
(72) Erfinder: Fröhlich, Klaus, D-75177 Pforzheim (DE)
(74) Vertreter: Riedel, Peter, Dipl.-Ing.

(56) Entgegenhaltungen:
- EP-A- 0 226 710
- WO-A-94/05869
- CH-A- 276 204
- DE-A- 3 918 044
- DE-A- 4 228 463
- DE-U- 8 708 531

## Beschreibung

Die Erfindung betrifft ein Verfahren zur Herstellung einer Ankerschiene für die Bautechnik nach dem Oberbegriff des Patentanspruchs 1 sowie eine Ankerschiene nach dem Oberbegriff des Anspruchs 7. Eine solche Ankerschiene bzw. ein solches Verfahren ist aus der DE-A-3918044 bekannt.

In DE 39 18 044 A1 und EP 0 226 710 B1 sind Ankerschienen beschrieben, bei denen die in die Profilschiene einzusetzenden Anker so ausgeführt sind, daß der Fuß nach Art einer Senkkopfschraube konisch mit einem angrenzenden zylindrischen Abschnitt ausgebildet ist, der mit einem Absatz in den zylindrischen Schaft des Ankers übergeht. Der konische Abschnitt des Fußes ist an die Innenfläche der Ausformung in der Schiene angepaßt. Der Anker wird durch den Längsschlitz der Schiene hindurch in die Öffnung der Ausformung eingesetzt, so daß der konische Abschnitt paßgenau in der Ausformung liegt, während der angrenzende zylindrische Abschnitt von dem nach außen erweiterten Rand der öffnung umgeben ist. Der Anker wird zwecks Befestigung derart gestaucht, daß sich der zylindrische Abschnitt bis zur Anlage an den nach außen erweiterten Rand der Öffnung plastisch verformt, wodurch die formschlüssige Verbindung zwischen Anker und Profilschiene hergestellt ist. Die Formgebung der in die Profilschiene einzusetzenden Anker erfordert eine präzise und kostenaufwendige Herstellung der Anker und auch der Profilschiene, die mit ihren konischen Abschnitten aneinander angepaßt sein müssen.

Bei einer anderen bekannten Ankerschiene (EP 400 588 A1) sind die Anker zweiteilig ausgeführt. Der Ankerschaft mit dem Ankerkopf besteht aus billigem Baustahl, und der Ankerfuß ist eine Hülse aus nichtrostendem Stahl, die einen Bund zur Auflage auf dem Rand der zylindrischen öffnung aufweist, die in der Ausformung des Schienenrückens vorgesehen ist. Die Anker werden von außen in die Profilschiene eingesetzt, so daß sie sich mit dem Bund des Ankerfußes auf dem Schienenrücken abstützen, und anschließend wird der innerhalb der Schiene liegende Teil des Ankerfußes durch Stauchen verformt, wobei sich das Material an die Innenfläche der Schienenausformung anpaßt. Auch diese Ausführung der Ankerschiene ist fertigungstechnisch und damit auch hinsichtlich der Kosten aufwendig.

Es sind auch aus offenkundigen Vorbenutzungen Ankerschienen bekannt, bei denen die Öffnungen in den Ausformungen im Schienenrücken zylindrisch sind und die von außen einzusetzenden, einstückig ausgeführten Anker ebenfalls einen Bund zur Auflage auf dem Rücken der Profilschiene am Rand der zylindrischen Öffnung aufweisen. Bei einer dieser Ausführungen ist der Fuß des Ankers gegen den Ankerschaft abgesetzt, also im Querschnitt reduziert, so daß der Bund von der Stufe am Übergang vom Ankerfuß in den Ankerschaft gebildet ist. Die Herstellung eines solchen Ankers ist zwar kostengünstig, erfordert aber einen im Hinblick auf die Zugbelastung unnötigen Materialaufwand; denn für die zulässige Zugkraft ist nur der geringste Querschnitt des Ankers maßgeblich. Die zur Bildung der Stufe zwischen Fuß und Schaft vorgesehene Querschnittsvergrößerung des Schaftes ergibt daher einen zusätzlichen Materialaufwand, der für die aufzubringende Zugkraft nicht genutzt werden kann. Bei der anderen bekannten Ausführung hat der Fuß des einzusetzenden Ankers einen größeren Querschnitt als der Ankerschaft, und am Übergang zwischen Fuß und Schaft befindet sich der Bund, der auf dem Rücken der Profilschiene aufliegt. Die Formschlußverbindung mit der Profilschiene wird auch bei diesem Anker durch Stauchen des Ankerfußes erreicht, wobei das Ankermaterial innerhalb der Profilschiene plastisch verformt wird, während der Anker mit seinem Bund auf dem Rücken der Profilschiene aufsitzt.

Der Erfindung liegt die Aufgabe zugrunde, den Material- und Herstellungsaufwand für die Ankerschiene auf ein Minimum zu reduzieren, wobei die Zugfestigkeit der Anker und die Festigkeit der Verbindung zwischen ihnen und der Profilschiene gewährleistet bleiben soll.

Die Aufgabe wird bezüglich des Verfahrens mit den Merkmalen des Patentanspruches 1 und bezüglich der Ankerschiene durch die Merkmale des Anspruchs 7 gelöst.

Bei der erfindungsgemäßen Ankerschiene können die Anker sehr einfach ausgeführt sein und darum als Massenartikel billig hergestellt werden, wobei der Ankerschaft im Querschnitt nur nach Maßgabe der zulässigen Zugkraft zu dimensionieren ist. Vorzugsweise haben Schaft und Fuß des Ankers durchgehend gleichen zylindrischen Querschnitt. Eine besondere Formgebung zur Bildung eines Auflagers beim Einsetzen der Anker in die Schiene ist nicht erforderlich. Da der Ankerfuß nach Befestigung des Ankers den doppelkonischen Rand der Öffnung in der Ausformung der Profilschiene ausschließlich durch plastische Verformung umgreift, ist der Anker in beiden axialen Richtungen durch den so gebildeten Formschluß gegen Verschieben gesichert. Dabei bildet der äußere verformte Abschnitt, der auf dem nach außen erweiterten Randteil der Öffnung aufsitzt, die Sicherung gegen Herausfallen des Ankers aus der Profilschiene in Richtung von deren Längsschlitz, während der andere verformte Abschnitt des Ankerfußes an dem nach innen erweiterten Randabschnitt der Öffnung anliegt und der innere Abschnitt des Ankerfußes infolge der plastischen Verformung an die Ausformung des Schienenrückens vollständig angepaßt ist und die auf den Anker wirkenden Zugkräfte in die Profilschiene einleitet.

Nach dem erfindungsgemäßen Verfahren zur Herstellung einer solchen Ankerschiene werden zunächst in den Rücken der Profilschiene kreisrunde Ausnehmungen gestanzt, anschließend die Bereiche in der Umgebung der Ausnehmungen durch Drücken konisch nach außen verformt, danach die zylindrischen Anker von außen in die Ausnehmungen eingesetzt und schließlich an ihrem Fuß durch Stauchen so verformt, daß das verformte Material den Innenraum der Ausformungen ausfüllt und nach außen fließt, so daß der verformte Ankerfuß den doppelkonischen Rand der Öffnungen umgreift. Zur Abstützung der Anker während der Verformung ist jeweils ein Gesenk vorgesehen, das den Anker in seiner Lage hält und zusammen mit dem nach außen konisch erweiterten Rand der zugehörigen Öffnung einen Ringspalt bildet, in den das Material des Ankerfußes beim Stauchen fließen kann.

Weitere Merkmale der Erfindung ergeben sich aus den Unteransprüchen.

Die Erfindung wird im Folgenden anhand von Ausführungsbeispielen von Ankern erläutert, die in den Zeichnungen im Querschnitt der Profilschiene jeweils vor ihrer Verformung und nach dem Verformen mit dem zugehörigen Gesenk dargestellt sind. Es zeigen
- Fig. 1: schematisch in perspektivischer Darstellung ein Teilstück einer Ankerschiene mit eingesetzten Ankern,
- Fig. 2A und 2B: einen bis zum Ankerkopf durchgehend zylindrischen Anker,
- Fig. 3A und 3B: einen Anker mit zylindrischem Schaft und im Querschnitt größeren zylindrischen Fuß,
- Fig. 4A und 4B: einen vom Ankerkopf aus durchgehend zylindrischen Anker mit einem angeformten Bund,
- Fig. 5A 5B: einen Anker, der als unverformter Rohling durchgehend zylindrisch ist, mit Darstellung des Gesenkes (Fig. 5B),
- Fig. 5C: einen Schnitt nach V-V in Fig. 5B,
- Fig. 6A: einen Anker mit zylindrischem Schaft, der innerhalb des Gesenkes verformt wird, im Axialschnitt,
- Fig. 6B: das untere Ende des Ankers nach Fig. 6A im zu Fig. 6A rechtwinkligen Axialschnitt,
- Fig. 6C: einen Schnitt nach VI-VI in Fig. 6B,

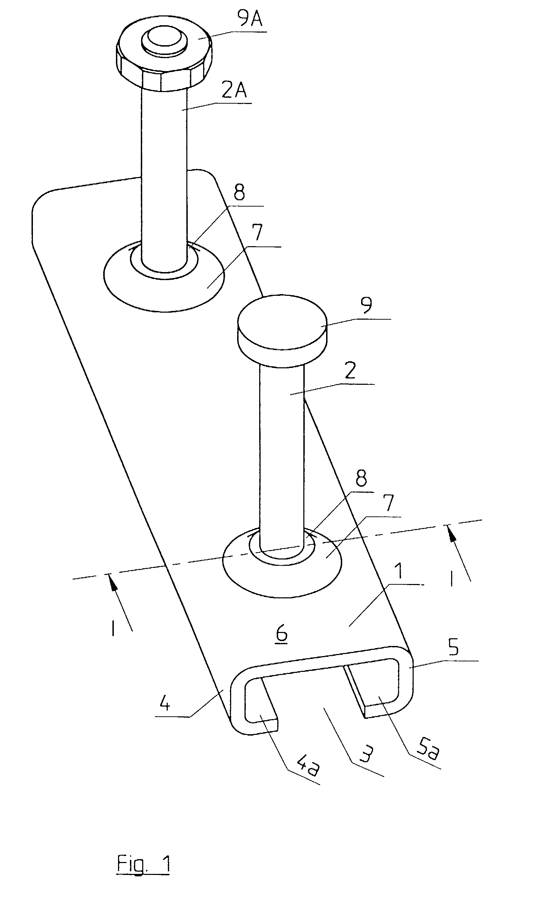

In Fig. 1 ist schematisch in perspektivischer Ansicht ein Teilstück einer Ankerschiene dargestellt, die aus einer Profilschiene 1 und in sie eingesetzten Ankern 2 und 2A besteht. Die Profilschiene 1 hat einen über ihre Länge durchgehenden Längsschlitz 3, der von den abgewinkelten Enden 4a und 5a ihrer beiden Schenkel 4 bzw. 5 begrenzt ist. Dem Längsschlitz 3 gegenüber liegt der Rücken 6 der Profilschiene. In dem Schienenrücken 6 sind nach außen gerichtete und nach außen konisch verjüngte Ausformungen 7 vorhanden, die jeweils eine zentrale kreisrunde Öffnung 8 aufweisen, durch die hindurch der zugehörige Anker 2 bzw. 2A gesteckt ist. Der Anker 2 hat einen durch Stauchen angeformten Kopf 9. Der Kopf des Ankers 2A ist durch eine aufgeschraubte Mutter 9A gebildet. Eine solche Ausführung des Ankers kann für spezielle Einsatzzwecke geeignet sein; aus Kostengründen ist jedoch die Ausführung des Ankers 2 mit angestauchtem Kopf 9 vorzuziehen.

Die Schnittlinie I-I bezeichnet den Querschnitt, in dem die im Folgenden erläuterten Ausführungsbeispiele der Ankerschiene dargestellt sind.

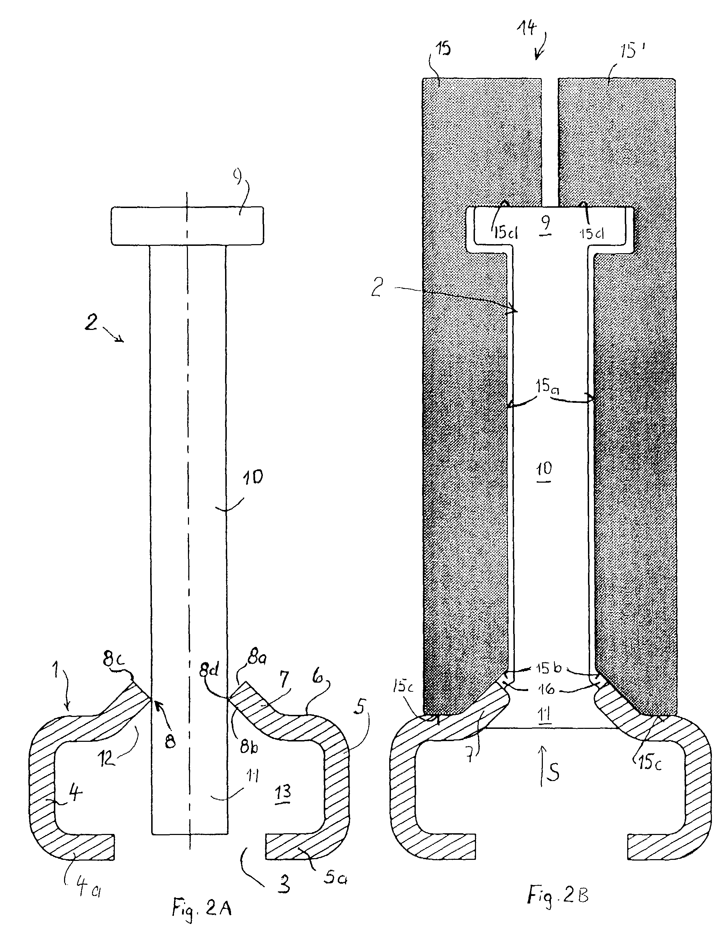

Fig. 2A zeigt einen Anker 2 mit angeformtem Kopf 9, Schaft 10 und Fuß 11 nach dem Einstecken in die Profilschiene 1 in der zum Stauchen vorbereiteten Position. Die Ausformung 7 im Rücken der Profilschiene 1 ist nach oben konisch verjüngt und enthält die Öffnung 8, deren Rand doppelkonisch ist, wobei der äußere Randbereich 8a nach außen und der innere Randbereich 8b nach innen konisch erweitert ist. Die Oberkante 8c der Öffnung 8 hat dementsprechend einen größeren Durchmesser als die Unterkante 8d, die den kleinsten Querschnitt der Öffnung 8 bestimmt. Der innere Randbereich 8b der Öffnung 8 begrenzt einen kegelstumpfförmigen Raum 12, der eine Erweiterung des im übrigen im Querschnitt etwa rechteckigen Innenraumes 13 der Profilschiene bildet.

Der Schaft 10 und der Fuß 11 des Ankers 2 sind durchgehend zylindrisch mit über die gesamte Länge von Schaft und Fuß gleichem kreisrundem Querschnitt ausgeführt. Der angeformte Kopf 9 ist ebenfalls zylindrisch. Anker dieser Formgebung sind sehr billig in Mengenfertigung als Stahlbolzen herzustellen. Die Stahlqualität und der Durchmesser des Ankers werden nach der jeweils vorzugebenden Zugbelastbarkeit gewählt.

Aus Fig. 2B ist ein Gesenk 14 ersichtlich, das aus zwei spiegelbildlich gleichen Gesenkteilen 15 und 15' besteht, die in Richtung zueinander und auseinander verfahrbar sind. Die beiden Gesenkteile haben im Querschnitt teilkreisförmige Innenflächen 15a, mit denen sie den Schaft 10 des Ankers 2 in der Betriebslage des Gesenkes 14 als Klemmbacken umgeben. Die Innenflächen 15a sind am unteren Ende des Gesenkes zu je einer teilkonischen Fläche 15b erweitert, die an die Außenfläche der Ausformung 7 der Profilschiene mit komplementärem Konuswinkel angepaßt ist. Auf dem an die Ausformung 7 angrenzenden Teil des Rückens 6 der Profilschiene sitzen die Gesenkteile 15 und 15' in der Betriebsstellung des Gesenkes 14 mit unteren Flächen 15c auf. Die Flächen 15b und 15c sowie obere, auf dem Ankerkopf 9 aufsitzende Flächen 15d der Gesenkteile bilden Widerlager beim Stauchen des Ankers. Der Ankerfuß 11 wird beim Stauchen in Richtung des Pfeiles S verformt.

Zum Stauchen des Ankerfußes wird durch den Längsschlitz 3 der Profilschiene hindurch ein (nicht dargestellter) Stempel eingeführt. Infolge des Druckes, der zwischen dem Stempel und den Widerlagern des Gesenkes 14 wirksam ist, beginnt das Material des Ankerfußes 11 zu fließen und füllt den kegelstumpfförmigen Raum 12 der Profilschiene derart aus, daß es am inneren Randbereich 8b der Öffnung 8 zur Anlage kommt. Die konischen Innenflächen 15b des Gesenkes 14 bilden zusammen mit dem konisch erweiterten Randbereich 8a der Öffnung 8 einen Ringspalt 16, in den ebenfalls Material des Ankerfußes 11 fließt. Nach Beendigung dieser plastischen Verformung umgreift daher der Ankerfuß 11 den Rand 8a, 8b der Öffnung 8 formschlüssig, wie aus Fig. 2B ersichtlich ist. Während des Verformungsvorganges am Ankerfuß bleiben die Außenfläche der Ausformung 7 und des Schienenrückens 6 in ihrer Form unverändert, weil die Gesenkteile 15 und 15' an diese Form genau angepaßt sind.

Der Durchmesser des Ankerfußes 11 und damit auch des Ankerschaftes 10 ist etwas kleiner als der Durchmesser der Öffnung 8 an deren Kante 8d, jedoch nur um so viel, daß der Anker ohne Klemmwirkung in die Profilschiene eingesetzt werden kann.

Wie Fig. 2B zeigt, ist der Ringspalt 16 in dem dargestellten Axialschnitt etwa dreieckig. Er kann aber auch eine andere Form haben.

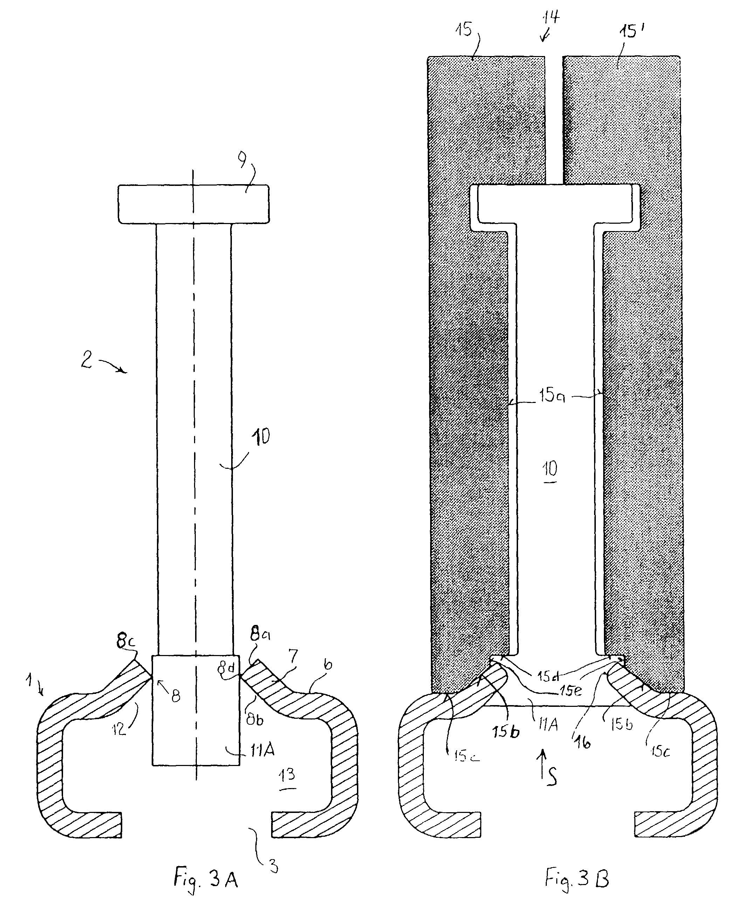

Die Fig. 3A und 3B zeigen eine solche abgewandelte Ausführung.

Der Anker 2 nach den Fig. 3A und 3B hat einen im unverformten Zustand (Fig. 3A) ebenfalls zylindrischen Ankerfuß 11A, der einen etwas größeren Durchmesser hat als der Schaft 10, so daß er gegen den Schaft stufenförmig abgesetzt ist. Der Fuß 11A ist in die Öffnung 8 mit geringem Spiel zu deren Unterkante 8d eingesetzt und endet-mit größerem Abstand oberhalb des Längsschlitzes 3 der Profilschiene 1, verglichen mit der Ausführung nach Fig. 2A. Dieser Unterschied folgt aus dem größeren Querschnitt des Ankerfußes 11A, weil in diesem Fall das Material des kürzeren Ankerfußes 11A zum Verfüllen des kegelstumpfförmigen Raumes 12 der Ausformung 7 ausreicht. Insgesamt ist also für diesen Anker keine größere Menge Werkstoff als für den Anker nach Fig. 2A erforderlich.

Das Gesenk 14 nach Fig. 3B hat im unteren Bereich seiner beiden Gesenkteile 15 und 15' je eine Auskehlung, die eine zur Längsachse des Gesenks radiale Stirnfläche 15d und eine an sie angrenzende zylindrische Seitenfläche 15e aufweist. An diese Seitenfläche 15e grenzt die konische Innenfläche 15b des Gesenkes an, die stumpfwinklig in die untere Fläche 15c der beiden Gesenkteile übergeht. Der Ringspalt 16 wird bei dieser Ausführung von den Flächen 15d und 15e der Gesenkteile 15 und 15' begrenzt sowie außerdem vom äußeren Randbereich 8a der Öffnung 8 und einem Teilstück der Außenfläche der Ausformung 7. Im dargestellten Axialschnitt übergreift dieser Ringspalt 16 die Oberkante 8c der Öffnung 8 mit seinen beiden zueinander rechtwinkligen, von den Gesenkteilen gebildeten Begrenzungsflächen 15d und 15e. Im übrigen sind die Gesenke nach den Fig. 2B und 3B gleich ausgebildet und dem Anker zugeordnet.

Wie aus Fig. 3B ersichtlich ist, wird mit dieser Ausführung des Ankers und des Gesenkes erreicht, daß das Material des Ankerfußes beim Stauchen bis an die Begrenzungsflächen des Ringspaltes 16 fließt, so daß der Ankerfuß nach der plastischen Verformung den Rand der Öffnung 8 bis über dessen Oberkante 8c hinaus übergreift und zusammen mit dem den Raum 12 ausfüllenden Bereich die Wand der Ausformung 7 formschlüssig umschließt. Damit erhält der Anker einen besonders sicheren Halt an der Profilschiene 1.

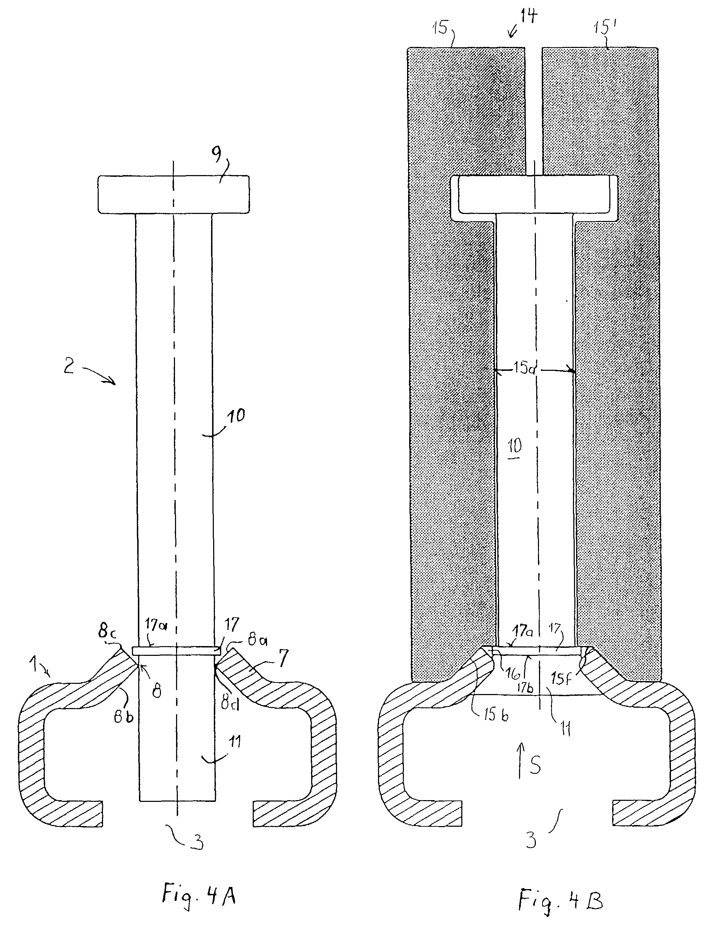

Bei der Ausführungsform nach den Fig. 4A und 4B sind der Schaft 10 und der Fuß 11 des Ankers 2 wie bei dem Anker nach Fig. 2A durchgehend zylindrisch mit gleichem Durchmesser ausgeführt. Im Übergangsbereich zwischen Schaft und Fuß ist ein Bund 17 vorhanden, der nach dem Einstecken des Ankers frei oberhalb der Unterkante 8d der Öffnung 8 liegt und also Abstand vom äußeren Randbereich 8a der Öffnung hat. Die obere Stirnfläche 17a des Bundes 17 liegt etwa in gleicher Höhe wie die Oberkante 8c der Öffnung. In dieser Position wird der Anker von dem Gesenk 14 gehalten (Fig. 4B), wobei die obere Stirnfläche 17a des Bundes 17 an einer zur Längsachse des Gesenkes radialen Stirnfläche 15f des Gesenkes anliegt. Diese Stirnfläche 15f bildet zusammen mit dem äußeren Randbereich 8a der Öffnung 8 den im Axialschnitt etwa dreieckigen Ringspalt 16 und geht in die konische Innenfläche 15b des Gesenkes stumpfwinklig über. Die von den beiden Gesenkteilen 15 und 15' gebildete Stirnfläche 15f dient beim Stauchen des Ankerfußes 11 als Widerlager, an dem die obere Stirnfläche 17a des Bundes 17 anliegt. Die untere Stirnfläche 17b des Bundes 17 begrenzt das Fließen des Materials während des Stauchvorganges, so daß die entsprechende plastische Verformung des Ankerfußes 11 an den Bund 17 angrenzt und mit ihm zusammen die Unterkante 8d der Öffnung 8 umgreift. Auch bei dieser Ausführung dient also der oberhalb der Unterkante 8d der Öffnung liegende plastisch verformte Teil des Ankerfußes zur Sicherung gegen axiales Verschieben des Ankers in Richtung auf den Längsschlitz 3 der Profilschiene, ist aber von dem Bund 17 abgedeckt, dessen obere Stirnfläche 17a dadurch eine ebene Oberfläche für den Rand des Ankerfußes ergibt.

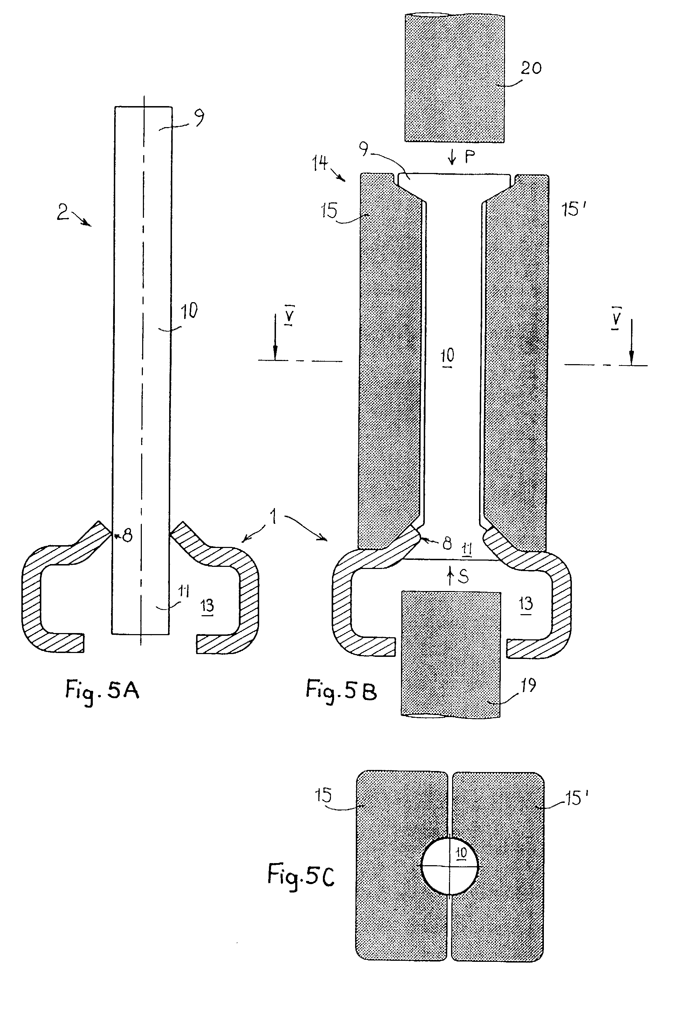

In den Fig. 5A, 5B und 5C ist ein Anker 2 mit dem bei der Verformung verwendeten Gesenk 14 gezeigt, wobei eine besonders kostengünstige Herstellung der Ankerschiene möglich ist. Der Anker 2 besteht vor der Verformung aus einem durchgehend zylindrischen Rohling (Fig. 5A), der durch Ablängen von massivem stangenförmigem Material erhalten wird. Das eine Ende dieses zylindrischen Rohlings bildet den Kopf 9, das andere Ende den Fuß 11 und der zwischen beiden befindliche Abschnitt den Schaft 10. Das Gesenk 14 ist am unteren Ende wie das Gesenk nach Fig. 2B ausgeführt, während das obere Ende des Gesenks in dessen geschlossenem Zustand konisch ist. Nach dem Einsetzen des Rohlings in die Profilschiene 1 wird das Gesenk 14 geschlossen, und danach wird ein Stempel 19 durch den Längsschlitz der Profilschiene 1 hindurch in deren Innenraum 13 hinein geführt, wie durch den Pfeil S angegeben ist. Zugleich wird ein zweiter Stempel 20 in Richtung des Pfeiles P gegen das andere Ende des Rohlings vorgeschoben. Die beiden Stempel 19 und 20 stauchen den Rohling an dessen beiden Enden und bilden zugleich Widerlager für den jeweils anderen Stempel 20 bzw. 19. Beim Stauchvorgang wird der Fuß 11 entsprechend der Ausführung nach Fig. 2B verformt, so daß er den Rand der Öffnung 8 mittels plastischer Materialverformung umgreift. Gleichzeitig wird der Kopf 9 des Ankers 2 im Gesenk 14 durch plastische Materialverformung zu einem verdickten Teil ausgebildet. Die Form dieses verdickten Kopfes 9 wird durch die Form des Gesenks 14 bestimmt. Der Fuß 11 des Ankers 2 kann auch durch entsprechende Gestaltung des Gesenks 14 eine andere Form beim Stauchen annehmen. Wesentlich ist, daß das Material des Ankers durch den Stauchvorgang derart zum Fließen gebracht wird, daß der Fuß 11 den Rand der Öffnung 8 umfließt und danach formschlüssig umgreift. Bei dieser Ausführung nach Fig. 5A und 5B ist die Herstellung der Ankerschiene besonders einfach, weil der Rohling für den Anker 2 kostengünstig aus Stangenmaterial durch einfaches Ablängen hergestellt wird und die fertige Form des Ankers 2 mit verbreitertem Fuß 11 und verdicktem Kopf 9 durch einen einzigen Stauchvorgang im Gesenk 14 entsteht, wobei die formschlüssige Verbindung zwischen Anker und Profilschiene hergestellt wird.

In Fig. 5C ist das Gesenk 14 im Schnitt V-V nach Fig. 5B schematisch dargestellt, wobei die beiden Gesenkteile 15 und 15' durch Schließen des Gesenks 14 den Ankerschaft 2 eng umgreifen. Diese Schließstellung ist bei dem Gesenk auch für die anderen Ausführungen gegeben. In den dargestellten Axialschnitten des Gesenks 14 ist lediglich zur besseren Unterscheidung der Gesenkteile 15 und 15' vom Ankerschaft 10 ein Spalt zwischen Gesenk und Ankerschaft sichtbar, der bei geschlossenem Gesenk während des Stauchvorganges nicht vorhanden ist. Vielmehr liegen dabei die Gesenkteile an dem Ankerschaft 10 fest an, der durch das Stauchen nicht verformt werden soll.

Das dargestellte Gesenk 14 besteht aus zwei Gesenkteilen 15 und 15', die in der Schließstellung den Ankerschaft 10 fast vollständig umfassen, so daß zwischen den einander zugekehrten Flächen der Gesenkteile ein Spalt von nur sehr geringer Breite vorhanden ist. Anstelle eines zweiteiligen kann auch ein mehrteiliges Gesenk verwendet werden, das beispielsweise aus vier, sechs oder acht gleichen Teilen bestehen kann.

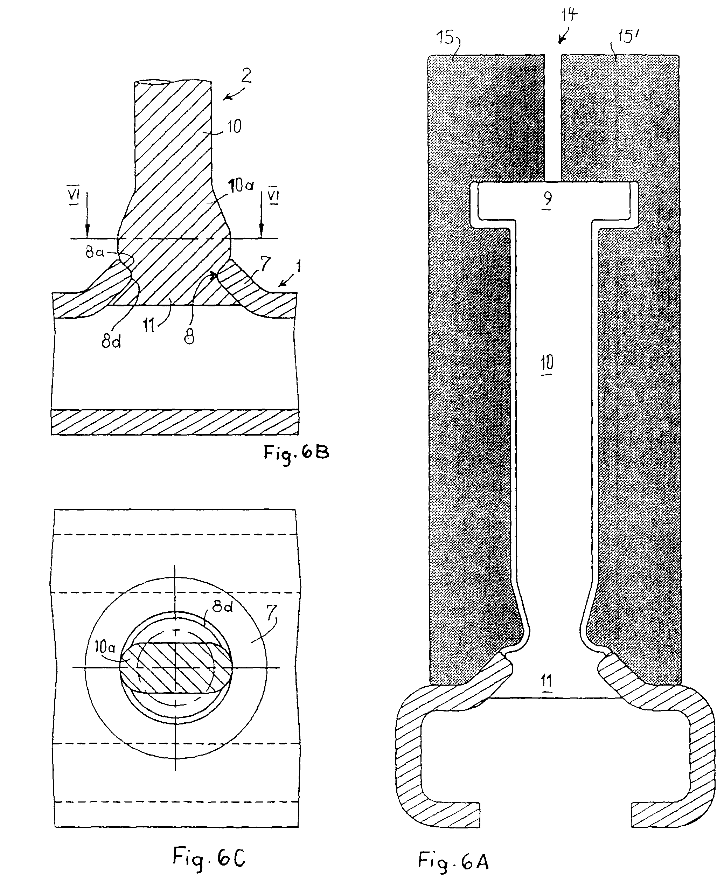

Die Fig. 6A, 6B und 6C zeigen eine Ausführungsform, bei der eine Verformung des Ankerschaftes 10 in dem an den Fuß 11 angrenzenden Bereich vorgesehen ist. Fig. 6A zeigt die Profilschiene 1 mit eingesetztem und durch Stauchen verformtem Anker 2 und das zugehörige Gesenk 14 im Axialschnitt. In Fig. 6B ist ein zu diesem Axialschnitt senkrechter Axialschnitt durch die Profilschiene 1 und das untere Ende des Ankers 2 mit dem Fuß 11 dargestellt, und Fig. 6C ist ein Schnitt nach VI-VI in Fig. 6B.

Bei dieser Ausführung sind die beiden Gesenkteile 15 und 15' so ausgebildet, daß der Übergangsbereich 10a des Ankerschaftes 10 zum Ankerfuß 11 durch Schließen des Gesenks 14 gepreßt und dabei abgeflacht wird. Das Material des Schaftes 10 fließt in diesem Übergangsbereich 10a an zwei einander gegenüberliegenden Seiten des Schaftes 10 über die Unterkante 8d der Öffnung 8 der Profilschiene 1 nach außen, wie aus den Fig. 6B und 6C ersichtlich ist, während unterhalb der abgeflachten Seiten dieses Übergangsbereiches 10a der Ankerfuß 11 durch Stauchen verformt ist und dadurch den Rand der Öffnung 8 formschlüssig umgreift, wie Fig. 6A zeigt. Durch die Abflachung des Ankerschaftes 10 zum Übergangsbereich 10a entsteht ein besonders fester Sitz des Ankers 2 in der Profilschiene 1. Bei dieser Ausführung kann der verdickte Ankerkopf 9 auch durch Stauchen angeformt werden, wie im Zusammenhang mit Fig. 5B beschrieben wurde.

## Patentansprüche

1. Verfahren zur Herstellung einer Ankerschiene für die Bautechnik, wobei eine im wesentlichen U-förmige Profilschiene (1) abgewinkelte Schenkel (4 und 5) zur Bildung eines Längsschlitzes (3) aufweist und an ihrem Rücken (6) mit Öffnungen (8) und diesen umgebende Ausformungen (7) versehen wird, in die ein Anker (2) einsetzbar und mit der Profilschiene (1) verbindbar ist, wobei zunächst Öffnungen (8) kreisrund gestanzt und anschließend die diese Öffnungen (8) umgebenden Bereiche des Schienenrückens (6) durch Drücken zu nach außen konisch verjüngten Ausformungen (7) derart verformt werden, daß der äußere Randbereich (8a) der Öffnungen (8) nach außen und der innere Randbereich (8b) nach innen erweitert ist,
dadurch gekennzeichnet, daß
a) in jede Öffnung (8) von außen ein massiver Anker (2) mit kreisrundem Querschnitt so weit eingeschoben wird, daß sein Fuß (11) oberhalb des Längsschlitzes (3) im Innenraum (13) der Profilschiene (1) endet,
b) der Anker (2) in seiner Lage mittels eines zweioder mehrteiligen Gesenks (14) positioniert wird, derart, daß das Gesenk (14) mit seinen Gesenkteilen (15 und 15') an Teilbereichen der konischen Ausformung (7) von außen anliegt,
c) das Gesenk (14) zusammen mit dem konisch nach außen erweiterten Bereich (8a) des Randes der Öffnung (8) einen Ringspalt (16) begrenzt,
d) anschließend der innerhalb der Profilschiene (1) befindliche Abschnitt des Schaftes (10) durch Stauchen so verformt wird, daß das gestauchte Material des Ankerfußes (11) den Innenraum (12) der Ausformung (7) bis an deren innere konische Wandung ausfüllt und zum Teil in den Ringspalt (16) fließt.

2. Verfahren nach Anspruch 1,
dadurch gekennzeichnet, daß die Gesenkteile (15 und 15') mit ihrer teilkonischen Innenfläche (15b) an der konischen Mantelfläche der Ausformung (7) der Profilschiene (1) anliegen und vorzugsweise außerdem mit einer teilringförmigen unteren Stirnfläche (15c) auf dem Rücken (6) der Profilschiene (1) in dem an die Ausformung (7) angrenzenden Bereich aufsitzen, derart, daß diese Flächen (15b und 15c) der Gesenkteile (15 und 15') beim Stauchen des Ankerfußes (11; 11A) ein Widerlager bilden.

3. Verfahren nach Anspruch 2,
dadurch gekennzeichnet, daß die teilkonischen Innenflächen (15b) der Gesenkteile (15 und 15') über die Oberkante (8c) der Öffnung (8) der Profilschiene (1) in Richtung auf den Anker (2) überstehen, derart, daß der Ringspalt (16) im Axialschnitt des Gesenkes (14) etwa dreieckig ist.

4. Verfahren nach Anspruch 2,
dadurch gekennzeichnet, daß die teilkonischen Innenflächen (15b) der Gesenkteile (15 und 15') im Übergangsbereich zu den teilzylindrischen, den Ankerschaft (10) umgebenden Innenflächen (15a) ausgeklinkt sind, derart, daß der Ringspalt (16) jeweils von einer radialen Stirnfläche (15d) und einer teilzylindrischen Seitenfläche (15e) der Gesenkteile (15 und 15') mitbegrenzt ist und sich über die Oberkante (8c) der Öffnung (8) hinaus radial nach außen erstreckt.

5. Verfahren nach Anspruch 2,
dadurch gekennzeichnet, daß an die teilkonischen Innenflächen (15b) von der Oberkante (8c) der Öffnung (8) aus nach innen gerichtete radiale Stirnflächen (15f) der Gesenkteile (15 und 15') anschließen, die zusammen mit dem konisch nach außen erweiterten Randbereich (8a) der Öffnung (8) den Ringspalt (16) begrenzen.

6. Verfahren nach einem der Ansprüche 1 bis 5,
dadurch gekennzeichnet, daß der Kopf (9) des Ankers (2) durch Stauchen im Gesenk (14) als verdickter Teil des vor dem Stauchen durchgehend zylindrischen Ankers (2) ausgebildet wird.

7. Ankerschiene für die Bautechnik, bestehend aus einer Profilschiene (1) und an ihr befestigten massiven Ankern (2), wobei die Profilschiene (1) im Querschnitt etwa U-förmig ist und ihre Schenkel (4 und 5) abgewinkelte, einander zugewandte Enden (4a; 5a) aufweisen, die einen durchgehenden Längsschlitz (3) begrenzen, und am Schienenrücken (6) nach außen gerichtete, in bezug auf den Innenraum (13) der Profilschiene (1) konisch verjüngte Ausformungen (7) vorhanden sind, die jeweils eine Öffnung (8) aufweisen, deren Rand (8a, 8b) doppelkonisch ist, wobei der äußere Randbereich (8a) nach außen und der innere Randbereich (8b) nach innen konisch erweitert ist und die Oberkante (8c) der öffnung (8) dementsprechend einen größeren Durchmesser hat als die Unterkante (8d), die den kleinsten Querschnitt der Öffnung (8) bestimmt, und wobei die Anker (2) jeweils einen Kopf (9) und einen zylindrischen Schaft (10) mit einem Fuß (11) aufweisen, der in der Öffnung (8) einer der Ausformungen (7) nach plastischer Materialverformung formschlüssig gehalten ist,
dadurch gekennzeichnet, daß
a) die Anker (2) vor ihrer Befestigung an der Profilschiene (1) vom Kopf (9) aus über ihre ganze Länge einen kleineren Querschnitt haben als die Öffnung (8) an deren Oberkante (8c) und der vordere Teil des Ankerfußes (11) etwas kleiner als der Durchmesser der Öffnung (8) an deren Unterkante (8d) ist,
b) daß die Anker (2) mit ihrem Fuß (11) nach der Befestigung den Rand (8a, 8b) der Öffnung (8) ausschließlich mittels der plastischen Materialverformung des Fußes (11) umgreifen,
c) ein äußerer verformter Abschnitt des Ankerfußes (11) an dem äußeren Randbereich (8a) der Öffnung (8) und ein innerer verformter Abschnitt des Ankerfußes (11) an den inneren Randbereich (8b) der Öffnung (8) anliegt, wobei durch Stauchen des Ankerfußes (11) durch den Längsschlitz (3) der Profilschiene (1) das Material des Ankerfußes (11) durch Fließen am inneren Randbereich (8b) und am äußeren Randbereich (8a) zur Anlage kommt.

8. Ankerschiene nach Anspruch 7,
dadurch gekennzeichnet, daß die Oberfläche der Anker (2) vom Ankerkopf (9) aus bis zum Ankerfuß (11; 11A) glatt, nämlich frei von Unebenheiten ist.

9. Ankerschiene nach Anspruch 7 oder 8,
dadurch gekennzeichnet, daß der Ankerfuß (11; 11A) im unverformten Zustand eine glatte, nämlich von Unebenheiten freie Oberfläche hat.

10. Ankerschiene nach einem der Ansprüche 7 bis 9,
dadurch gekennzeichnet, daß der Ankerkopf (9) an den Ankerschaft durch Stauchen angeformt ist.

11. Ankerschiene nach Anspruch 7,
dadurch gekennzeichnet, daß im Übergangsbereich zwischen Schaft (10) und Fuß (11) des Ankers (2) ein Bund (17) vorhanden ist.

12. Ankerschiene nach einem der Ansprüche 7 bis 11,
dadurch gekennzeichnet, daß der Schaft (10) und der Fuß (11) und vorzugsweise auch der Kopf (9) des Ankers (2) in unverformtem Zustand über die gesamte Länge des Ankers (2) gleichen Querschnitt mit einem Durchmesser haben, der etwas kleiner ist als der Durchmesser der öffnung (8) an deren Unterkante (8d).

13. Ankerschiene nach einem der Ansprüche 7 bis 11,
dadurch gekennzeichnet, daß der Ankerfuß (11A) einen größeren Querschnitt hat als der Ankerschaft (10) und gegen ihn in unverformtem Zustand stufenförmig abgesetzt sowie in die Öffnung (8) mit geringem Spiel zu deren Unterkante eingesetzt ist.

14. Ankerschiene nach Anspruch 7,
dadurch gekennzeichnet, daß die Anker (2) mit ihrem Fuß (11; 11A) mittels dessen Materialverformung auf dem Rand (8a, 8b) der Öffnung (8) in dessen äußerem, konisch nach außen erweiterten Randbereich (8a) gegen Axialkräfte abgestützt sind, die auf den Anker (2) in Richtung auf den Längsschlitz (3) der Profilschiene (1) wirken.

15. Ankerschiene nach Anspruch 14,
dadurch gekennzeichnet, daß der Ankerfuß (11A) oder ein abgeflachter Übergangsbereich (10a) zwischen Fuß (11) und Schaft (10) des Ankers (2) den äußeren Randbereich (8a) der Öffnung (8) formschlüssig übergreift.

## Claims

1. Process for producing an anchoring rail for the construction industry, whereby a rail, which is essentially U-shaped in cross-section (1), has side elements (4 and 5) forming a lengthwise slot (3), and is provided, on the back (6), with openings (8) and projections (7) into which an anchoring member (2) can be inserted and with which the U-shaped rail (1) can be connected, whereby openings (8) are first punched out and the areas, on the back of the rail (6), surrounding these openings (8), are deformed under pressure to form outwardly tapering, conical projections (7) such that the outer rim area (8a) of the openings (8) extends outwards and the inner rim area (8b) extends inwards,
characterized in that,
a) a solid anchoring member (2), with a round cross-section, is inserted into each opening (8) such that its base (11) ends above the lengthwise slot (3) in the inner space (13) of the U-shaped rail (1),
b) the anchoring member (2) is positioned by means of an open die or split-ring mould (14) such that the die or mould lies, on the outside, with its die sections (15 and 15'), on parts of the conical projection (7),
c) the die (14), together with the conical, outwardly extended area (8a) of the rim of the opening (8) borders on an annular clearance,
d) the section of the shaft (10) located within the U-shaped rail (1) is then deformed through compression, such that the compressed material fills the anchoring base (11) of the inner space (12) of the projection (7) up to the inner conical surface, and partly flows into the annular clearance (16).

2. Process in accordance with claim 1,
characterized in that the die sections (15 and 15') lie, with their partially conical inner surface (15b) on the conical surface of the projection (7) of the U-shaped rail (1) and preferably furthermore sit, with a divided annular lower end face (15c), in the area bordering on the projection (7), on the back (6) of the U-shaped rail (1), such that these surfaces (15b and 15c) of the die sections (15 and 15') form an abutment when the anchoring base (11; 11A) is compressed.

3. Process in accordance with claim 2,
characterized in that the partially conical inner faces (15b) of the die sections (15 and 15') project over the upper rim (8c) of the opening (8) of the U-shaped rail (1), in the direction of the anchoring member (2), such that the annular clearance (16), as seen in an axial section of the die (14), is approximately triangular.

4. Process in accordance with claim 2,
characterized in that the partially conical inner surfaces (15b) of the die sections (15 and 15') are, in the area of transition to the divided cylindrical inner surfaces (15a) which surround the anchor shaft (10) are thrown out, such that the annular clearance (16) is bordered on by a radial end face (15d) and a divided cylindrical lateral surface (15e) of the die sections (15 and 15') and extends, radially, outwards, over and beyond the upper rim (8c) of the opening (8).

5. Process in accordance with claim 2,
characterized in that radial end faces (15f), directed from the outside inwards, on the partially conical inner surfaces (15b) of the upper rim (8c) of the opening (8), adjoin the die sections (15 and 15'), the said radial end faces, together with the conically, outwardly extended rim area (8a) of the opening, bordering the annular clearance (16).

6. Process in accordance with any one of claims 1 to 5,
characterized in that the head (9) of the anchoring member (2) is developed as a thickened section of the anchoring member (2) which is continuous until it undergoes the compression.

7. Anchoring rail for the construction industry, comprising a rail (1) and solid anchoring members (2) attached to it, whereby the rail (1) is approximately U-shaped in cross-section and its side elements (4 and 5) have ends (4a; 5a) which are angled off towards each other and border on a continuous lengthwise slot (3), and there are conically tapering projections (7), on the back of the rail (1), which point outwards in the relation to the inner space (13) of the rail (1), the said projections each having an opening (8), the rim of which is doubly conical, whereby the outer rim area (8a) is extended outwards and the inner rim area (8b) is extended inwards, and the upper edge (8c) of the opening (8) has an accordingly larger diameter than the lower rim (8d) which determines the smallest cross-section of the opening (8), and whereby the anchoring members (2) each have a head (9) and a cylindrical shaft (10) with a base (11) which is held, formlocking, in the opening (8) of one of the projections (7), after plastic deformation,
characterized in that
a) the anchoring members (2) have a smaller diameter, over their whole length from the head downwards, than the opening (8) does on the upper rim (8c), before they are attached to the U-shaped rail (1), and the front section of the base (11) is a little smaller than the diameter of the opening (8) on its lower rim (8d),
b) the anchoring members (2), following attachment, grip, with their base (11), the rim (8a, 8b) of the opening (8), and this exclusively through plastic deformation.
c) an outer deformed section of the anchoring base (11) lies on the outer rim area (8a) of the opening (8) and an inner deformed section of the anchoring base (11) lies on the inner rim area (8b) of the opening (8) whereby, through compressing the anchoring base (11) through the lengthwise slot (3) in the U-shaped rail (1), the anchoring base (11) comes to lie, through flow deformation, against the inner rim area (8b) and outer rim area (8a).

8. Anchoring rail in accordance with claim 7,
characterized in that the upper surface of the anchoring member (2) is smooth, namely free of unevenness, from anchor head (9) to anchor base (11; 11A).

9. Anchoring rail in accordance with claim 7 or 8,
characterized in that the anchor base (11; 11 A) has a smooth, fully even surface, in the undeformed state.

10. Anchoring rail in accordance with any one of claims 7 to 9,
characterized in that the anchor head (9) is formed on the anchor shaft by compression.

11. Anchoring rail in accordance with claim 7,
characterized in that there is a collar (17) in the area of transition between the shaft (10) and base (11) of the anchoring member (2).

12. Anchoring rail in accordance with any one of claims 7 to 11,
characterized in that the shaft (10) and the base (11), and preferably also the head (9) of the anchoring member (2), have, in the undeformed state, the same cross-section, with one diameter, over the whole length of the anchoring member (2), which is a little smaller than the diameter of the opening (8) on its lower rim (8d).

13. Anchoring rail in accordance with any one of claims 7 to 11,
characterized in that the anchor base (11A) has a larger cross-section that the anchor shaft (10) and stands out against this, in the undeformed state, as a step gradation, and is inserted into the opening (8), with little play in relation to the lower rim.

14. Anchoring rail in accordance with claim 7,
characterized in that the anchoring member (2) is supported, with its base (11; 11A), against axial forces, by means of its material deformation onto the rim (8a, 8b) of the opening (8) in its outer rim area (8a) which is conically extended outwards, axial forces concerned acting on the anchoring member (2) in the direction of the lengthwise slot (3) of the U-shaped rail (1).

15. Anchoring rail in accordance with claim 14,
characterized in that the anchor base (11A), or a broadened area of transition (10a) between base (11) and shaft (10) of the anchoring member (2), overlaps the outer rim area (8a) of the opening (8) in a formlocking manner.

## Revendications

1. Procédé pour fabriquer un rail d'ancrage pour la technique du bâtiment, selon lequel un rail profilé (1) essentiellement en forme de U comporte des branches coudées (4 et 5) formant une fente longitudinale (3) et est pourvu d'ouvertures (8) au niveau de son dos (6) et de parties conformées (7) entourant ces ouvertures et dans lesquelles un élément d'ancrage (2) peut être inséré et relié au rail profilé (1), et selon lequel on découpe tout d'abord des ouvertures (8) de forme circulaire, puis on déforme les parties du dos (6) du rail, qui entourent ces ouvertures (8), par compression pour former des parties conformées (7) qui se rétrécissent en direction de l'extérieur avec une forme conique de telle sorte que la partie de bord extérieure (8a) des ouvertures (8) est élargie vers l'extérieur et que la partie de bord Intérieure (8b) est élargie vers l'intérieur, caractérisé en ce que
a) on insère un élément d'ancrage massif (2) possédant une section transversale circulaire, à partir de l'extérieur, dans chaque ouverture (8) jusqu'à ce que son pied (11) se termine au-dessus de la fente longitudinale (3) dans l'espace intérieur (13) du rail profilé (1),
b) l'élément d'ancrage (2) est fixé dans sa position à l'aide d'une matrice (14) formée de deux ou de plusieurs éléments, de telle sorte que la matrice (14) s'applique extérieurement, au moyen de ses parties (15 et 15'), contre des portions de la partie conformée conique (7),
c) la matrice (14) limite une fente annulaire (16), conjointement avec la partie (8a), qui s'élargit vers l'extérieur avec une forme conique, du bord de l'ouverture (8),
d) ensuite la partie de la tige (10), qui est située à l'intérieur du rail profilé (1), est déformée par refoulement de telle sorte que le matériau refoulé du pied (11) de l'élément d'ancrage remplit l'espace intérieur (12) de la partie conformée (7) jusqu'au niveau de sa paroi conique intérieure et reflue en partie dans la fente annulaire (16).

2. Procédé selon la revendication 1, caractérisé en ce que les parties (15 et 15') de la matrice s'appliquent, par leur surface intérieure partiellement conique (15b), contre la surface enveloppe conique de la partie conformée (7) du rail profilé ( 1 ) et de préférence prennent appui en outre, par une surface frontale inférieure de forme partiellement annulaire (15c), sur le dos (6) du rail profilé (1) dans la zone contiguë à la partie conformée (7) de telle sorte que ces surfaces (15b et 15c) des parties de matrice (15 et 15') forment une butée lors du refoulement du pied (11; ;11A) de l'élément d'ancrage.

3. Procédé selon la revendication 2, caractérisé en ce que les surfaces intérieures partiellement coniques (15a) des parties (15 et 15') de la matrice font saillie en direction de l'élément d'ancrage (2) au-delà du bord supérieur (8c) de l'ouverture (8) du rail profilé (1), de telle sorte que la fente annulaire (7) a une forme approximativement triangulaire lorsqu'on regarde une coupe axiale de la matrice (14).

4. Procédé selon la revendication 2, caractérisé en ce que les surfaces intérieures partiellement coniques (15b) des parties (15 et 15') de la matrice sont encochées dans la zone de jonction avec les surfaces intérieures partiellement cylindriques (15a), qui entourent la tige (10) de l'élément d'ancrage, de telle sorte que la fente annulaire (7) est respectivement limitée conjointement par une surface frontale radiale (15d) et une surface latérale partiellement cylindrique (15e) des parties (15 et 15') de la matrice et s'étend radialement vers l'extérieur au-delà du bord supérieur (8c) de l'ouverture (8).

5. Procédé selon la revendication 2, caractérisé en ce qu'aux surfaces intérieures partiellement coniques (15b) du bord supérieur (8c) de l'ouverture (8) se raccordent des surfaces frontales radiales (15f) des parties (15 et 15') de la matrice, qui sont dirigées vers l'intérieur et délimitent la fente annulaire (16), conjointement avec la partie de bord (8a), qui s'élargit vers l'extérieur avec une forme conique, de l'ouverture (8).

6. Procédé selon l'une des revendications 1 à 5, caractérisé en ce que la tête (9) de l'élément d'ancrage (2) est formée par refoulement dans la matrice (14) sous la forme d'une partie épaissie de l'élément d'ancrage (2) qui possède une forme cylindrique continue avant le refoulement.

7. Rail d'ancrage pour la technique du bâtiment, constitué par un rail profilé (1) et des éléments d'ancrage massifs (2) fixés sur ce rail, dans lequel le rail profilé (1) possède approximativement une forme de U en coupe transversale et ses branches (4 et 5) possèdent des extrémités coudées (4a ;5a) tournées l'une vers l'autre, qui délimitent une fente longitudinale continue (3), et qu'il est prévu des parties conformées (7), qui sont dirigées vers l'extérieur sur le dos (6) du rail et se rétrécissent avec une forme conique par rapport à l'espace intérieur (13) du rail profilé (1), ces parties conformées possédant chacune une ouverture (8), dont le bord (8a,8b) est biconique, et dans lequel la partie de bord extérieure (8a) s'élargit avec une forme conique vers l'extérieur et la partie de bord intérieure (8b) s'élargit avec une forme conique vers l'intérieur et le bord supérieur (8c) de l'ouverture (8) possède de façon correspondante un diamètre supérieur à celui du bord inférieur (8d), qui détermine la section transversale la plus petite de l'ouverture (8), et dans lequel les éléments d'ancrage (2) possèdent chacun une tête (9) et une tige cylindrique (10) comportant un pied (11), qui est retenu dans l'ouverture (8) de l'une des parties conformées (7) selon une liaison par formes complémentaires après déformation plastique de la matière, caractérisé en ce que
a) avant leur fixation au rail profilé (1), les éléments d'ancrage (2) possèdent à partir de la tête (9) et sur toute leur longueur une section transversale plus petite que l'ouverture (8) au niveau de son bord supérieur (8c), et la partie avant du pied (il) de l'élément d'ancrage possède un diamètre légèrement inférieur au diamètre de l'ouverture (8) au niveau de son bord inférieur (8d),
b) après la fixation, les éléments d'ancrage (2) entourent par leur pied (11), le bord (8a,8b) de l'ouverture (8) exclusivement sous l'effet de la déformation plastique de la matière du pied (11),
c) une partie extérieure déformée du pied (11) des éléments d'ancrage s'applique sur la partie de bord extérieure (8a) de l'ouverture (8) et une partie intérieure déformée du pied (11) des éléments d'ancrage s'applique contre la partie de bord intérieure (8b) de l'ouverture (8), auquel cas sous l'effet du refoulement du pied (11) des éléments d'ancrage à travers la fente longitudinale (3) du rail profilé (1), le matériau du pied (11) des éléments d'ancrage s'applique par fluage contre la partie de bord intérieure (8b) et contre la partie de bord extérieure (8a).

8. Rail d'ancrage selon la revendication 7, caractérisé en ce que la surface des éléments d'ancrage (2) est lisse, c'est-à-dire exempte d'inégalités de surface, depuis la tête (9) des éléments d'ancrage jusqu'au pied (11; 11A) des éléments d'ancrage.

9. Rail d'ancrage selon la revendication 7 ou 8, caractérisé en ce que le pied (11 ; 11A) des éléments d'ancrage possède, à l'état non déformé, une surface lisse, c'est-à-dire exempte d'inégalités de surface.

10. Rail d'ancrage selon l'une des revendications 7 à 9, caractérisé en ce que la tête (9) des éléments d'ancrage est conformée par refoulement contre la tige des éléments d'ancrage.

11. Rail d'ancrage selon la revendication 7, caractérisé en ce qu'un collet (17) est présent dans la zone de jonction entre la tige (10) et le pied (11) de l'élément d'ancrage (2).

12. Rail d'ancrage selon l'une des revendications 7 à 11, caractérisé en ce que la tige (10) et le pied (11) et de préférence également la tête (9) de l'élément d'ancrage (2) possèdent à l'état non déformé, et ce sur toute la longueur de l'élément d'ancrage (2), la même section transversale avec un diamètre qui est légèrement inférieur au diamètre de l'ouverture (8) au niveau de son bord inférieur (8d).

13. Rail d'ancrage selon l'une des revendications 7 à 11, caractérisé en ce que le pied (11A) de l'élément d'ancrage possède une section transversale supérieure à celle de la tige ( 10) de l'élément d'ancrage et est étagé en formant un épaulement par rapport à cette tige, à l'état non déformé, et est inséré dans l'ouverture (8), avec un faible jeu par rapport au bord inférieur de cette ouverture.

14. Rail d'ancrage selon la revendication 7, caractérisé en ce que les éléments d'ancrage (2) sont supportés par leurs pieds (11 ; 11A), moyennant une déformation de la matière de ce pied, sur le bord (8a,8b) de l'ouverture (8), dans la zone de bord extérieure (8a) de cette ouverture, qui s'élargit avec une forme conique vers l'extérieur, à l'encontre de forces axiales, qui agissent sur l'élément d'ancrage (2) en direction de la fente longitudinale (3) du rail profilé (1).

15. Rail d'ancrage selon la revendication 14, caractérisé en ce que le pied (11A) de l'élément d'ancrage ou une zone de jonction aplatie (10a) présente entre le pied (11) et la tige (10) de l'élément d'ancrage (2) s'engage selon une liaison par formes complémentaires sur la zone de bord extérieure (8a) de l'ouverture (8).
